# EUROPÄISCHE PATENTSCHRIFT

(11) **EP 4 167 123 B1**
(45) Veröffentlichungstag und Bekanntmachung des Hinweises auf die Patenterteilung: **15.11.2023**
(21) Anmeldenummer: 22195028.0
(22) Anmeldetag: 12.09.2022
(51) Int. Cl.: G06K 7/10

(54) **KAMERABASIERTER CODELESER UND VERFAHREN ZUM LESEN OPTISCHER CODES**
CAMERA-BASED CODE READER AND METHOD FOR READING OPTICAL CODES
LECTEUR DE CODE BASÉ SUR UNE CAMÉRA ET PROCÉDÉ DE LECTURE DE CODE OPTIQUE

(30) Priorität: 18.10.2021 DE 102021126906
(43) Veröffentlichungstag der Anmeldung: 19.04.2023
(73) Patentinhaber: SICK AG, 79183 Waldkirch (DE)
(72) Erfinder: Ruf, Hannes, St. Peter (DE); Müller, Dr. Romain, 79252 Stegen (DE); Rheinboldt, Johannes, 79104 Freiburg (DE)

(56) Entgegenhaltungen:
- EP-A1- 3 812 953
- US-A1- 2005 167 504

## Beschreibung

Die Erfindung betrifft einen kamerabasierten Codeleser und ein Verfahren zum Lesen optischer Codes nach dem Oberbegriff von Anspruch 1 beziehungsweise 13.

Codeleser sind von Supermarktkassen, zur automatischen Paketidentifikation, Sortierung von Postsendungen, von der Gepäckabfertigung in Flughäfen und aus anderen Logistikanwendungen bekannt. Ein kamerabasierter Codeleser nimmt mittels eines Bildsensors Bilder der Objekte mit den darauf befindlichen Codes auf, und eine Bildauswertungssoftware extrahiert aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

In einer wichtigen Anwendungsgruppe werden die einen Code tragenden Objekte an dem Codeleser vorbei gefördert. Mit dem Bildsensor werden wiederholt Bilddaten aufgenommen, die sich je nach Aufnahmefrequenz und Fördergeschwindigkeit mehr oder weniger überlappen. Ein Codeleser ist vielfach Teil eines komplexeren Codelesesystems. So sind oft mehrere Codeleser an einem Lesetunnel vorgesehen, um Objekte von mehreren oder allen Seiten aufzunehmen. Dabei sind zusätzliche Sensoren vorgesehen, wie ein Encoder zur Bestimmung des Fördervorschubs beziehungsweise der Fördergeschwindigkeit oder ein Laserscanner, der die Geometrie der Objekte vermisst.

Dank der Fortentwicklung in der Kamera- und Bildsensortechnologie werden die zu verarbeitenden Bilder immer größer. Die ungeheuren Datenmengen stellen die begrenzten Rechenkapazitäten und Bandbreiten zur Weitergabe und Verarbeitung in einer Kamera unter Echtzeitbedingungen vor Herausforderungen. Dabei unterstützt der Einsatz heterogener Rechenarchitekturen, d.h. einem Verbund eines Mikroprozessors (CPU, Central Processing Unit) mit beispielsweise einem FPGA (Field Programmable Gate Array), einem DSP (Digital Signal Processor), einer GPU (Graphics Processing Unit) oder einem sogenannten Kl-Beschleuniger (NPU, Neural Processing Unit, TPU, Tensor Processing Unit).

Besonders bewährt hat sich hier die Kombination mit einem FPGA, das für das Auslesen der Bilddaten aus dem Bildsensor zuständig ist. Das FPGA ist zudem über eine Hochgeschwindigkeitsschnittstelle (PCI, Peripheral Component Interconnect, PCIE, PCI Express, MIPI, Mobile Industry Processor Interface) mit einem Speicher des Mikroprozessors verbunden. So werden die Bilddaten über DMA (Direct Memory Access) vom FPGA in den Speicher übertragen. Dieser Prozess des Auslesens und Speicherns wird als Streaming bezeichnet. Der mittels CPU implementierte Decoder kann dann nachgelagert auf die gespeicherten Bilder zugreifen und die Codes auslesen. Der Streaming-Ansatz ist mit anderen oben genannten Zusatzbausteinen einer heterogenen Architektur nicht ohne Weiteres möglich, die in der Regel schon selbst eines gespeicherten Bildes bedürften, während das FPGA Bilddaten direkt pixelweise auslesen und weiterverarbeiten kann.

Die Bilddaten werden vorzugsweise schon unmittelbar, on-the-fly, im FPGA vorverarbeitet, und dabei können mit den Bilddaten Zusatzinformationen oder Metadaten für den Mikroprozessor gespeichert werden. Typische Vorverarbeitungsschritte betreffen die Binarisierung, mit der aus einem Grauwertbild ein Schwarz-Weiß-Bild wird, oder die Segmentierung, in der interessierende Bereiche (ROI, Region of Interest) mit Codekandidaten aufgefunden werden. So beschreibt die EP 2 003 599 A1 einen optoelektronischen Sensor und ein Verfahren zur Erfassung von Codes, in dem ein Binarisierer für eine Umwandlung eines Farb- oder Grauwertbildes in ein Binärbild bereits während des Empfangs und/oder in Echtzeit ausgebildet ist, indem ein jeweils eingelesener Abschnitt binarisiert wird, noch während die weiteren Abschnitte eingelesen werden. Die EP 2 555 160 B1 findet in einer Vorverarbeitung auf einem FPGA interessierende Bereiche oder Codekandidaten anhand eines Kontrastmaßes. In der noch unveröffentlichten europäischen Anmeldung mit dem Aktenzeichen 20176228.3 werden erste Schichten eines neuronalen Netzes zu Segmentierung schon während des Einlesens auf einem FPGA durchlaufen. Die EP 1 365 577 A1 offenbart ein Verfahren zum Betrieb eines optoelektronischen Sensors, in dem ein Bild bereits während des Empfanges komprimiert wird.

Dabei wird jeweils die Fähigkeit des FPGAs ausgenutzt, viele einfache Rechenoperationen wie beispielsweise Matrixmultiplikationen parallel in Echtzeit auszuführen. Sequentielle, komplexere Rechenoperationen des Decoders bleiben dem Mikroprozessor vorbehalten, der dafür auf die bereitgestellten Bilddaten und mögliche Vorverarbeitungsergebnisse zurückgreift. Es gibt aber Fälle etwa extremer Modulgrößen, in denen der Decoder auf Schwierigkeiten stößt und für einen erfolgversprechenden Leseversuch rechenintensive Operationen auf sehr vielen Pixeln durchführen muss. Das verfügbare Zeitfenster für das Decodieren bis zum Einlaufen neuer Bilddaten mit weiteren Codes reicht unter solchen Umständen womöglich nicht mehr aus. Andererseits kann das FPGA entsprechende Verarbeitungsschritte nicht einfach prophylaktisch während des Streamens auf allen einlaufenden Bilddaten durchführen. Zum einen würde das unnötigen Rechenaufwand auslösen, da viele Codes auch ohne die zusätzlichen Verarbeitungsschritte gelesen würden. Außerdem sind geeignete Verarbeitungsschritte einzelfallabhängig auszuwählen, und erst der Decoder hat die notwendigen Informationen, insbesondere nach ersten vergeblichen Leseversuchen, um über die für den aktuellen Sonderfall geeigneten Schritte zu entscheiden.

Die EP 3 812 953 A1 offenbart einen Codeleser mit einem Abstandssensor, der für sein Decodierverfahren in Abhängigkeit von einem gemessenen Abstandswert einen Parameter setzt und/oder einen Zusatzalgorithmus einbezieht. Der Codeleser weist ein FPGA für Vorverarbeitungen und einen Mikroprozessor für das eigentliche Decodierverfahren auf. Es kann ein Testdecoder vorgesehen sein, der Pausenzeiten dafür nutzt, verschiedene Einstellungen auszuprobieren. Daraus können Anweisungen an das FPGA für den künftigen Betrieb abgeleitet werden.

Aus der US 2005/0167504 A1 ist ein Barcodeleser mit einem Bildverarbeitungsmodus bekannt. Die programmierbare Steuerungseinheit des Barcodelesers umfasst einen Mikroprozessor und ein FPGA, wobei der Mikroprozessor hauptsächlich mit dem Decodieren und das FPGA hauptsächlich mit anderen Funktionen befasst ist. In einem sogenannten Parser-Modus, der von Hand gestartet wird, können Bilddaten zu einem bereits gelesenen Code dargestellt werden, und dafür können Bildbereiche reskaliert, gedreht und entzerrt werden.

Es ist daher Aufgabe der Erfindung, das Codelesen in einer heterogenen Architektur weiter zu verbessern.

Diese Aufgabe wird durch einen kamerabasierten Codeleser und ein Verfahren zum Lesen optischer Codes nach Anspruch 1 beziehungsweise 13 gelöst. Optische Codes sind beispielsweise Barcodes, oder 2D-Codes nach einem beliebigen Standard. Ein Bildsensor nimmt Bilddaten mit einer Vielzahl von Pixeln auf, typischerweise hochaufgelöst mit einem Zeilensensor mit mehreren Kilopixel oder einem Matrixsensor mit mehreren Megapixel. Im Betrieb erfasst der Codeleser mit optischen Codes versehene Objekte, so dass dann die Bilddaten mindestens einen Bereich mit einem optischen Code enthalten.

Eine erste Verarbeitungseinheit des Codelesers liest die Bilddaten des Bildsensors ein, also das vorzugsweise hochaufgelöste Rohbild, und überträgt die Bilddaten in einen Speicher. Das Einlesen und Speichern erfolgt als Bilddatenstrom in Gruppen benachbarter Pixel und wird als Streaming bezeichnet. Die Bilddaten werden je nach Ausführungsform möglicherweise direkt während des Streamings vorverarbeitet, und es werden entsprechend verarbeitete Bilddaten beziehungsweise bei der Vorverarbeitung gewonnene Zusatzinformationen oder Metadaten gespeichert. Der Codeleser umfasst außerdem eine zweite Verarbeitungseinheit zum Decodieren, also einem Auswerten oder Verarbeiten der im Speicher abgelegten Bilddaten und möglichen Vorverarbeitungsergebnisse, um den Codeinhalt der optischen Codes in den Bilddaten auszulesen.

Die Erfindung geht von dem Grundgedanken aus, die erste Verarbeitungseinheit zusätzlich zur Unterstützung der zweiten Verarbeitungseinheit während des Decodierens zu nutzen. Die erste Verarbeitungseinheit erhält dadurch eine Doppelfunktion, nämlich zusätzlich als Coprozessor in Erweiterung der bisherigen Funktion des Streamens, d.h. Einlesens und Abspeicherns von Bilddaten. Entsprechend ist die erste Verarbeitungseinheit für mindestens eine Hilfsfunktion ausgebildet, die zumindest Teile der bereits in den Speicher gestreamten Bilddaten nochmals zurückliest, um eine Vorverarbeitung durchzuführen und das Ergebnis der Vorverarbeitung erneut zu speichern. Die Hilfsfunktion wird nur bei Bedarf von der zweiten Vorverarbeitungseinheit ausgelöst, wenn der Decodierer dies für das Decodieren des aktuellen Codes benötigt. Die erste Verarbeitungseinheit arbeitet dann in ihrer zweiten Rolle als Coprozessor und unterstützt die zweite Verarbeitungseinheit mit der Hilfsfunktion. Das Ergebnis der Hilfsfunktion können aufbereitete Bilddaten und/oder Zusatzinformationen beziehungsweise Metadaten sein. Die zweite Verarbeitungseinheit greift auf diese Ergebnisse im Speicher zu, um das Decodieren fortzusetzen, gegebenenfalls unter erneuter Inanspruchnahme einer Hilfsfunktion der ersten Verarbeitungseinheit.

Die Erfindung hat den Vorteil, dass die zweite Verarbeitungseinheit entlastet werden kann. Das ist besonders vorteilhaft für pixelbasierte und damit vielfach benötigte Operationen, die von der ersten Verarbeitungseinheit wesentlich effizienter durchgeführt werden. Somit wird die Laufzeit verbessert oder eine Verarbeitung innerhalb des verfügbaren Zeitfensters überhaupt erst ermöglicht. Dem Decodierer können sogar Algorithmen erschlossen werden, die nach dem bekannten Vorgehen überhaupt nicht in Betracht gezogen würden, da der zweiten Verarbeitungseinheit dafür nicht genügend Rechen- und Zeitressourcen zur Verfügung stehen.

Die erste Verarbeitungseinheit weist bevorzugt ein FPGA (Field Programmable Gate Array) und/oder die zweite Verarbeitungseinheit einen Mikroprozessor (CPU) auf. Ein FPGA ist besonders geeignet zum Streamen sowie für eine Echtzeitverarbeitung großer Datenmengen mit vergleichsweise einfachen einzelnen Rechenoperationen. Eine CPU dagegen ist viel flexibler und von sich aus zu komplexeren Rechenschritten in der Lage, und das ist für die Decodierung von Vorteil. Stößt die CPU während des Decodierens auf ein Problem, das doch wieder eine Vielzahl einfacher Rechenoperationen erfordert, etwa das Manipulieren auf Pixelebene in einem größeren Bildbereich, so kann sie dafür auf die Hilfsfunktion des FPGA zurückgreifen.

Die erste Verarbeitungseinheit liest bevorzugt jeweils eine Bildzeile oder einen Teil davon aus dem Bildsensor aus und legt sie in dem Speicher ab. Das Bild wird demnach zeilenweise von dem Bildsensor eingelesen beziehungsweise gestreamt, und die Verarbeitung erfolgt zeilenorientiert. Für Vorverarbeitungen, die mehr als ein Bildzeile betreffen, beispielsweise die Faltung mit einem Filterkern, kann die erste Verarbeitungseinheit einen Bildpuffer aufweisen, in dem rollierend eine entsprechende Anzahl Bildzeilen zwischengespeichert wird. Prinzipiell kann in gleicher Weise statt mit Bildzeilen auch mit Bildspalten gearbeitet werden. Das wird hier lediglich als Unterschied in der Definition der Koordinaten aufgefasst und nicht unterschieden.

Die erste Verarbeitungseinheit ist bevorzugt dafür ausgebildet, jeweils von dem Bildsensor eingelesene Bilddaten vor der Übertragung in den Speicher schon vorzuverarbeiten, noch während weitere Bilddaten von dem Bildsensor eingelesen werden. Die erste Verarbeitungseinheit ist somit für eine Vorverarbeitung "on-the-fly" beziehungsweise schon während des Streamens ausgebildet. Diese Vorverarbeitung ist von der Hilfsfunktion deutlich zu unterscheiden. Sie erfolgt gleichsam direkt an der Quelle und noch bevor der Decoder der zweiten Verarbeitungseinheit überhaupt Zugriff auf die Bilddaten erhalten hat. Eine Hilfsfunktion dagegen wird gezielt vom Decoder auf Basis bereits von der ersten Verarbeitungseinheit gespeicherter Bilddaten angefordert.

Die erste Verarbeitungseinheit weist bevorzugt eine erste Partition zum Übertragen von Bilddaten aus dem Bildsensor in den Speicher und eine zweite Partition zum Ausführen von Hilfsfunktionen auf. Innerhalb der ersten Verarbeitungseinheit sind somit die beiden Funktionen Streaming und Coprocessing beziehungsweise Übertragen von Bilddaten und Ausführen von Hilfsfunktionen klar getrennt. Insbesondere sind dafür auf einem FPGA getrennte Flächen oder Bereiche vorgesehen. Es kann weitere Partitionen geben, vorzugsweise eine dritte Partition mit Algorithmen, die unter Umständen von beiden Partitionen benötigt werden.

Die erste Partition und die zweite Partition werden bevorzugt mit unterschiedlichen Taktfrequenzen betrieben. Das ist dank einer klaren Trennung technisch möglich. Auf diese Weise kann beispielsweise ein begrenztes energetisches oder thermisches Budget sehr gezielt aufgeteilt werden. Eine Anpassung der Taktfrequenz betrifft vorzugsweise die Hilfsfunktion, da das Streamen mit der typischerweise festen Framerate Schritt halten muss und weniger situativ und anpassbar ist.

Die erste Verarbeitungseinheit ist bevorzugt für eine Segmentierung mit Auffinden von interessierenden Bereichen mit Codekandidaten als Hilfsfunktion ausgebildet. Das ist eine beispielhafte Coprozessor- oder Hilfsfunktion. Es können eine oder mehrere solcher Hilfsfunktionen implementiert werden. Inhaltlich können manche Verarbeitungen einer Hilfsfunktion schon während des Streamens durchgeführt werden. Das ist dann aber keine Hilfsfunktion im hier verstandenen Sinne, da eine Hilfsfunktion gezielt nach dem Streamen vom Decoder für bereits gespeicherte Bilddaten angefordert oder ausgelöst wird. Die Segmentierung, in der Bildbereiche (ROI, Region of Interest) mit mutmaßlichen optischen Codes oder Codekandidaten aufgefunden werden, wird wie einleitend erwähnt im Stand der Technik bisweilen schon on-the-fly während des Streamens durchgeführt. Alternativ fordert erst der Decodierer die Segmentierung an, oder lässt in Ergänzung zu einer schon während des Streamens erfolgten Vorsegmentierung eine verfeinerte oder unter anderen Parametern durchgeführte Segmentierung ausführen.

Die erste Verarbeitungseinheit ist bevorzugt für eine Auflösungserhöhung als Hilfsfunktion ausgebildet. Das ist eine weitere beispielhafte Coprozessor- oder Hilfsfunktion, und die allgemeinen Bemerkungen des Vorabsatzes gelten für diese und weitere Hilfsfunktionen analog. Eine Auflösungserhöhung entspricht einer nachträglichen oder digitalen Zoom-Funktion. Unter Begriffen wie Upsampling und Superresolution sind dafür zahlreiche Ansätze an sich bekannt. Die zweite Verarbeitungseinheit des Decoders hat jedoch herkömmlich häufig nicht die erforderlichen Ressourcen, so dass eine entsprechende Hilfsfunktion die Auflösungserhöhung erheblich beschleunigt oder überhaupt erst ermöglicht. Die Auflösungserhöhung kann ein ganzes Bild, einen Teilbereich, insbesondere eine ROI mit einem Codekandidaten, oder nur einen Codeabschnitt betreffen.

Die erste Verarbeitungseinheit ist bevorzugt für eine Drehung eines Bildabschnitts als Hilfsfunktion ausgebildet. Das ist eine weitere beispielhafte Coprozessor- oder Hilfsfunktion. Die Formeln oder Algorithmen für eine Drehung sind allgemein bekannt. Es handelt sich jedoch um eine pixelbasierte Verarbeitung, die die zweite Verarbeitungseinheit meist nicht leisten könnte, so dass die Unterstützung der ersten Verarbeitungseinheit einen großen Verbesserungsschritt darstellt.

Die erste Verarbeitungseinheit ist bevorzugt für die Bearbeitung mit einem Filter als Hilfsfunktion ausgebildet, insbesondere einem Schärfefilter, einem Kantenfilter oder einem Rausch- oder Glättungsfilter. Die Faltung eines Bildes oder Bildbereichs mit einem Filterkern erfordert eine Vielzahl von Einzeloperationen, die von der ersten Verarbeitungseinheit effizient geleistet wird, die zweite Verarbeitungseinheit aber im vorgegebenen Zeitbudget überfordern würde. So kann ein Bild aufgeschärft, eine Kanten- und damit Moduldetektion vorbereitet oder eine Entzerrung (Debluring) vorgenommen werden.

Die erste Verarbeitungseinheit ist bevorzugt für einen Mustervergleich mit Codeabschnitten als Hilfsfunktion ausgebildet. Mustervergleich (Template Matching) ermöglicht die Erkennung von Codeabschnitten oder eine zumindest teilweise Decodierung direkt auf den Bilddaten. Während der Decoder üblicherweise mit binarisierten Schwarz-Weiß-Bilddaten arbeitet, kann der Mustervergleich auf den zugrundeliegenden Farb- oder Grauwertdaten durchgeführt werden.

Die erste Verarbeitungseinheit ist bevorzugt für eine perspektivische Korrektur oder eine Verzeichniskorrektur als Hilfsfunktion ausgebildet. Dadurch wird eine ungünstige Perspektive auf einen aufgenommenen Code oder ein Verzeichnisfehler des Objektivs des Bildsensor ausgeglichen. Das erfordert jeweils Operationen auf Pixelebene, die von der ersten Verarbeitungseinheit effizient als Hilfsfunktion umgesetzt werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Übersichtsdarstellung der beispielhaften Montage eines kamerabasierten Codelesers über einem Förderband; und
- Fig. 2: eine schematische Darstellung einer heterogenen Architektur mit FPGA als Streamer und CPU als Decoder, in der das FPGA zusätzlich als Coprozessor fungiert.

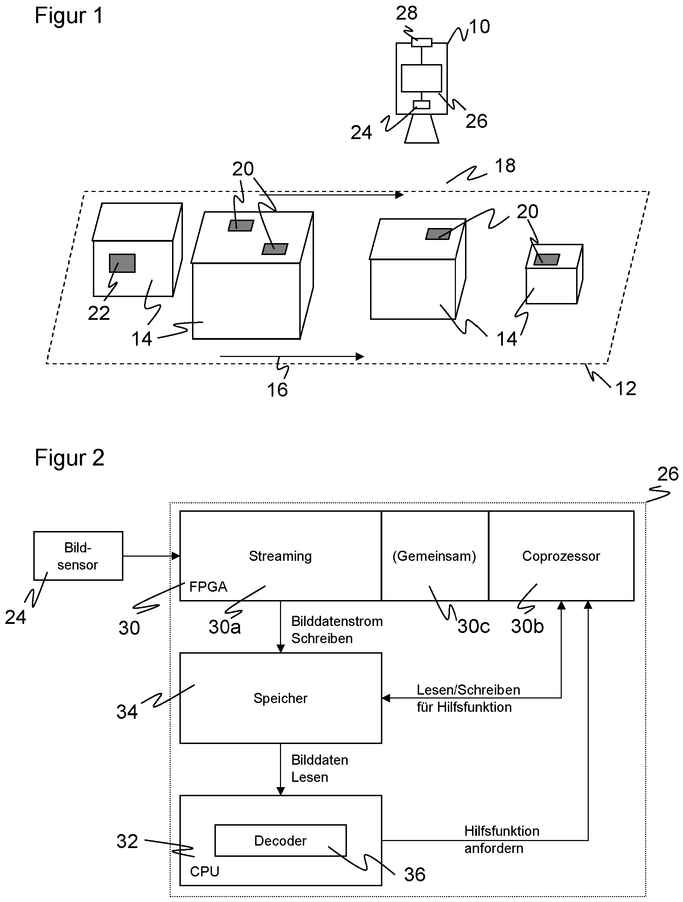

Figur 1 zeigt einen kamerabasierten Codeleser 10, der über einem Förderband 12 montiert ist, welches Objekte 14, wie durch den Pfeil 16 angedeutet, durch den Erfassungsbereich 18 des Codelesers 10 fördert. Die Objekte 14 tragen an ihren Außenflächen Codes 20, die von dem Codeleser 10 erfasst und ausgewertet werden. Die Codes 20 können von dem Codeleser 10 nur dann erkannt werden, wenn sie auf der Oberseite oder zumindest von oben sichtbar angebracht sind. Daher kann abweichend von der Darstellung in Figur 1 zum Lesen eines etwa seitlich oder unten angebrachten Codes 22 eine Mehrzahl von Codelesern 10 aus verschiedenen Richtungen montiert sein, um eine sogenannte Omnilesung aus allen Richtungen zu ermöglichen. Die Anordnung der mehreren Codelesern 10 zu einem Lesesystem erfolgt in der Praxis meist als Lesetunnel. Diese stationäre Anwendung des Codelesers an einem Förderband ist in der Praxis sehr häufig. Die Erfindung bezieht sich aber auf die Verarbeitung von Bilddaten beziehungsweise den Codeleser 10 selbst, so dass dieses Beispiel nicht einschränkend verstanden werden darf.

Der Codeleser 10 erfasst mit einem Bildsensor 24 Bilddaten der geförderten Objekte 14 und der Codes 20, die von einer Steuer- und Auswertungseinheit 26 mittels Bildauswertung und Decodierverfahren weiterverarbeitet werden. Die Steuer- und Auswertungseinheit 26 wird sogleich unter Bezugnahme auf die Figur 2 näher beschrieben. Über eine Schnittstelle 28 gibt der Codeleser 10 Informationen aus, wie gelesene Codes oder Bilddaten.

Figur 2 zeigt die Steuer- und Auswertungseinheit 26 und ihre Anbindung in einer schematischen Darstellung. Die Steuer- und Auswertungseinheit 26 umfasst eine erste Verarbeitungseinheit 30, die im Folgenden am Beispiel eines FPGA (Field Programmable Gate Array), sowie eine zweite Verarbeitungseinheit 32, die im Folgenden am Beispiel einer CPU (Central Processing Unit) erläutert wird. Die erste Verarbeitungseinheit 30 weist zumindest zwei Abschnitte auf, wobei der erste Abschnitt 30a mit Streaming und der zweite Abschnitt 30b mit Coprozessor bezeichnet ist, und kann einen optionalen dritten gemeinsamen Abschnitt 30c umfassen. Die zweite Verarbeitungseinheit 32 weist einen Decoder 36 zum Auslesen von optischen Codes anhand von Bilddaten auf.

Die erste Verarbeitungseinheit 30 ist einerseits mit dem Bildsensor 24 (Imager Interface) verbunden und weist andererseits eine Hochgeschwindigkeitsschnittstelle in Richtung der zweiten Verarbeitungseinheit 32 auf (PCI, PCIE, MIPI). Für die Erfindung relevant ist dabei insbesondere, dass beide Verarbeitungseinheiten 30, 32 auf einen Speicher 34 für Bilddaten und Verarbeitungsergebnisse zugreifen. Die entsprechenden Lese- und Schreibvorgänge erfolgen vorzugsweise mittels DMA (Direct Memory Access). Der Speicher 34 lässt sich mindestens funktional, je nach Ausführungsform auch strukturell als Teil der CPU 32 auffassen. Eine weitere Verbindung zwischen den beiden Verarbeitungseinheiten 30, 32 ermöglicht den Aufruf einer Hilfsfunktion.

Im Betrieb nimmt nun der Bildsensor 24 jeweils ein neues Bild oder einen neuen Bildabschnitt auf. Das kann ein rechteckiges Bild eines Matrixsensors sein, es sind aber auch einzelne oder mehrere Bildzeilen eines Zeilensensors vorstellbar, die dann sukzessive im Verlauf der Relativbewegung zwischen Codeleser 10 und Objekt 14 ein Gesamtbild ergeben. Die Bilddaten des Bildsensors 24 werden von der ersten Verarbeitungseinheit ausgelesen, hier speziell deren ersten Abschnitt 30a, und in den Speicher 34 übertragen oder gestreamt.

Der Decoder 36 der zweiten Verarbeitungseinheit 32 greift auf die Bilddaten in dem Speicher 34 zu, um den Inhalt der mit den Bilddaten aufgenommenen optischen Codes auszulesen. In einigen Fällen bedarf es dafür pixel- und rechenintensiver Operationen, für die eine CPU nicht sonderlich geeignet ist und die in der ersten Verarbeitungseinheit 30 viel effizienter und schneller durchgeführt werden könnten. Der Decoder 36 kann sich in solchen Fällen dafür entscheiden, sich von der ersten Verarbeitungseinheit 30 als Coprozessor unterstützen zu lassen. Die erste Verarbeitungseinheit 30 erhält damit eine Doppelfunktion als Streamer und Coprozessor.

Die unterstützende Funktion wird als Hilfsfunktion bezeichnet. Zuständig hierfür ist nun der zweite Abschnitt 30b der ersten Verarbeitungseinheit 30. Nach entsprechendem Aufruf durch die zweite Verarbeitungseinheit 32 greift die erste Verarbeitungseinheit 30 noch einmal auf die bereits gespeicherten Bilddaten des Speichers 34 zu beziehungsweise lädt sie nochmals in die erste Verarbeitungseinheit 30 zurück. Sie führt die Hilfsfunktion aus und schreibt die Ergebnisse erneut in den Speicher 34. Der Decoder 36 der zweiten Verarbeitungseinheit 32 kann auf dieser Basis durch Zugriff auf den Speicher 34 das Codelesen fortsetzen.

Die Hilfsfunktion betrifft vorzugsweise die Manipulation von Bilddaten auf Pixelebene, kann aber stattdessen oder zusätzlich auch Auswertungen vornehmen und entsprechende Zusatzinformationen oder Metadaten erzeugen, die dann ebenfalls in den Speicher 34 geschrieben werden. Über solche Metadaten kann der Decoder 36 auch gewünschte Parametrierungen der Hilfsfunktion vornehmen, oder die Parametrierung erfolgt über eine dafür geeignete Schnittstelle der ersten Verarbeitungseinheit 30 (Register Interface).

Auch schon während des Streamens sind Vorverarbeitungen denkbar, so dass bereits die erstmals von dem ersten Abschnitt 30a der ersten Verarbeitungseinheit 30 in den Speicher übertragenen Bilddaten und mögliche zugehörige Metainformationen ein Vorverarbeitungsergebnis sind. Solche Vorverarbeitungsschritte werden aber immer und für alle Bilddaten gleichartig durchgeführt. Der Decoder 36 konnte zu diesem Zeitpunkt noch gar nicht eingreifen und die konkreten Bilddaten beurteilen. Eine Hilfsfunktion hingegen wird nur bei Bedarf aufgrund der aktuellen Bilddaten vorgenommen und ist überdies gezielt für diese Bilddaten parametrierbar.

Ein Beispiel für eine Vorverarbeitung, die während des Streamens und/oder danach als Hilfsfunktion durchgeführt werden kann, ist die Segmentierung, bei der interessierende Bereiche (ROI, Region of Interest) mit Codekandidaten aufgefunden werden. Während des Streamens oder on-the-fly erfolgt dies aufgrund allgemeiner Kriterien, als Hilfsfunktion hingegen ist dies spezifisch auch nur für Teile der Bilddaten und beispielsweise mit einem besonders aufwändigen Verfahren für schwer zu interpretierende Bildbereiche möglich.

Wie schon erläutert, weist die erste Verarbeitungseinheit 30 verschiedene Partitionen oder Abschnitte 30a-c auf. Der erste Abschnitt 30a ist für das Streamen und gegebenenfalls Vorverarbeitungen und Erzeugung von Metadaten während des Streamens, der zweite Abschnitt 30b für das Abarbeiten von Hilfsfunktionen als Coprozessor zuständig. Ein optionaler dritter Abschnitt 30c ist für gemeinsam genutzte Funktionen zuständig, die sowohl während des Streamens als auch während der Ausführung von Hilfsfunktionen benötigt werden. Die Abschnitte 30a-c sind vorzugsweise nicht nur funktional zu verstehen, sondern durch Trennungen, insbesondere in unterschiedliche Bereiche oder Flächenabschnitte, tatsächlich separat implementiert, bilden folglich echte Partitionen. Die Abschnitte 30a-c können sogar bei Bedarf mit einer unterschiedlichen Taktfrequenz betrieben werden. Dies ist besonders bei einem begrenzten energetischen oder thermischen Budget von Interesse, um die Gesamtleistung der verschiedenen Funktionen abzugleichen und zu optimieren.

Einige nicht abschließend genannten Beispiele für Hilfsfunktionen werden nachfolgend beschrieben. Es wird mindestens eine Hilfsfunktion bereitgestellt, es können aber auch mehrere Hilfsfunktionen in beliebiger Kombination sein. Ebenso hat der Decoder der zweiten Verarbeitungseinheit 32 von Fall zu Fall die Wahl, ob eine Hilfsfunktion angefordert wird und welche einzelne Hilfsfunktion oder Kombination von Hilfsfunktionen das ist. Eine Hilfsfunktion kann auch mehrfach aufgerufen werden. Ein Beispiel könnte hier eine sich wiederholende Schicht eines neuronalen Netzes sein, die durch Mehrfachaufruf der entsprechenden Hilfsfunktion mit jeweiligen Veränderungen der Gewichte implementiert wird.

Ein Beispiel einer Hilfsfunktion ist eine Auflösungserhöhung. Das entspricht einer Zoom-Funktion, die aber nicht auf einer optischen Vergrößerung basiert, sondern die Auflösung der Bilddaten nachträglich verfeinert. Der Decoder 36 hat einen Bedarf für diese Hilfsfunktion beispielsweise im Falle besonders kleiner Modulgrößen, wenn also ein Codeelement durch zu wenige Pixel repräsentiert ist. Algorithmen für ein Upsampling durch Interpolation, etwa bikubisch, bilinear, linear oder mittels Splines, sind an sich bekannt. Es werden Bilddaten, beispielsweise Grauwerte, aus dem Speicher 34 wieder in die erste Verarbeitungseinheit 30 beziehungsweise deren zweiten Abschnitt 30b rückübertragen, vorzugsweise gemeinsam mit einem gewünschten Faktor der Auflösungserhöhung und dem gewünschten Interpolationsverfahren. Für eine Interpolation sind Faktoren zwei, vier, ... ideal. Andere Ansätze sind in der Literatur unter dem Stichwort Superresolution beschrieben, wofür insbesondere neuronale Netze genutzt werden.

Ein weiteres Beispiel einer Hilfsfunktion ist eine Drehung oder ein Rotieren eines Bildbereichs oder Codes. Vorzugsweise werden hierfür einzelne Zeilensegmente nacheinander aus dem Speicher 34 in die erste Verarbeitungseinheit 30 rückübertragen, wobei der Decoder 36 den gewünschten Drehwinkel ermittelt und der ersten Verarbeitungseinheit 30 mitteilt. Es werden vorzugweise in Abhängigkeit von dem vom Drehwinkel nur die relevanten Zeilensegmente übertragen und bearbeitet. Metainformationen wie die Lage des Codes innerhalb der Zeilensegmente können in beide Richtungen mitgeschickt werden. In Erweiterung einer Drehung in der Ebene ist auch eine perspektivische Korrektur vorstellbar.

Ein weiteres Beispiel einer Hilfsfunktion ist ein Filter. Die Faltung mit einem Filterkern ist im Prinzip eine Matrixoperation und daher ein FPGA dafür besonders gut geeignet. Hier gibt es zahlreiche Möglichkeiten, die Rauschen, Verzerrungen und Verzeichnungen, Bewegungsunschärfe und dergleichen betreffen können. Beispielsweise kann, wenn die Codestrukturen aufgrund von Rauschen ein zu schlechtes Signal-Rausch-Verhalten zeigen, ein Schärfefilter angewendet werden. Dabei sind mögliche Parameter ein mittlerer Grauwert, größte und kleinste Grauwerte und weitere statistische Größen wie die Standardabweichung. Eine Kantenerkennung kann durch entsprechende Filter, wie Sobelfilter, vorbereitet und verbessert werden. Eine Unschärfe oder eine Bewegungsunschärfe können durch geeignete Filter (Lucy-Richardson Deconvoluton, Deblurring) wenigstens teilweise kompensiert werden. Eine Geokorrektur insbesondere zur Kompensation von Verzeichnungsfehlern kann auch als Filter aufgefasst werden. Es ist denkbar, ergänzend zu einem Filter oder stattdessen bestimmte kennzeichnende Größen wie einen Schärfegrad zu bestimmen und als Metainformation zurückliefern. Der Decoder 36 kann dann beurteilen, ob ein Leseversuch erfolgreich sein wird beziehungsweise welche weiteren Maßnahmen und womöglich Hilfsfunktionen zuvor noch erforderlich sind. Effekte ähnlich den genannten Filtern lassen sich auch mit Hilfe von neuronalen Netzen erzielen.

Ein weiteres Beispiel einer Hilfsfunktion ist ein Mustervergleich (Template matching). Damit wird versucht, direkt auf den Farb- oder Grauwertbilddaten ein Codesegment zu finden und zu decodieren. In diesem Zusammenhang sind Parameter wie die Modulgröße, die Muster (Templates), statistische Werte und der Codetyp von Interesse. Auch für diese Hilfsfunktion eignen sich neuronale Netze.

## Patentansprüche

1. Kamerabasierter Codeleser (10), der einen Bildsensor (24) zum Erfassen von Bilddaten mit einem optischen Code (20), einen Speicher (34) zum Ablegen von Bilddaten, eine erste Verarbeitungseinheit (30) zum Übertragen der Bilddaten von dem Bildsensor (24) in den Speicher (34) in einem Bilddatenstrom und eine zweite Verarbeitungseinheit (32) aufweist, die für ein Decodieren (36) ausgebildet ist, bei dem die gespeicherten Bilddaten ausgewertet werden, um den Codeinhalt des optischen Codes (20) auszulesen,
**dadurch gekennzeichnet,**
**dass** die erste Verarbeitungseinheit (30) für mindestens eine Hilfsfunktion ausgebildet ist, in der die erste Verarbeitungseinheit (30) zumindest Teile der Bilddaten aus dem Speicher (34) zurückliest, vorverarbeitet und ein Vorverarbeitungsergebnis in den Speicher (34) zurückschreibt, so dass die erste Verarbeitungseinheit (30) eine Doppelfunktion als Streamer zum Übertragen der Bilddaten von dem Bildsensor (24) in den Speicher (34) und als Coprozessor zum Ausführen von Hilfsfunktionen erhält, und dass die zweite Verarbeitungseinheit (32) dafür ausgebildet ist, die Hilfsfunktion der ersten Verarbeitungseinheit (30) bei Bedarf zur Unterstützung des Decodierens (36) aufzurufen, wenn dies für das Decodieren des aktuellen Codes benötigt wird, und auf das Ergebnis der Hilfsfunktion zuzugreifen, um das Decodieren fortzusetzen.

2. Codeleser (10) nach Anspruch 1,
wobei die erste Verarbeitungseinheit (30) ein FPGA (Field Programmable Gate Array) und/oder die zweite Verarbeitungseinheit (32) einen Mikroprozessor aufweist.

3. Codeleser (10) nach Anspruch 1 oder 2,
wobei die erste Verarbeitungseinheit (30) jeweils eine Bildzeile oder einen Teil davon aus dem Bildsensor (24) ausliest und in dem Speicher (34) ablegt.

4. Codeleser (10) nach einem der vorhergehenden Ansprüche,
wobei die erste Verarbeitungseinheit (30) dafür ausgebildet ist, jeweils von dem Bildsensor (24) eingelesene Bilddaten vor der Übertragung in den Speicher (34) schon vorzuverarbeiten, noch während weitere Bilddaten von dem Bildsensor (24) eingelesen werden.

5. Codeleser (10) nach einem der vorhergehenden Ansprüche,
wobei die erste Verarbeitungseinheit (30) eine erste Partition (30a) zum Übertragen von Bilddaten aus dem Bildsensor (24) in den Speicher (34) und eine zweite Partition (30b) zum Ausführen von Hilfsfunktionen aufweist.

6. Codeleser (10) nach Anspruch 5,
wobei die erste Partition (30a) und die zweite Partition (30b) mit unterschiedlichen Taktfrequenzen betrieben werden.

7. Codeleser (10) nach einem der vorhergehenden Ansprüche,
wobei die erste Verarbeitungseinheit (30) für eine Segmentierung mit Auffinden von interessierenden Bereichen mit Codekandidaten als Hilfsfunktion ausgebildet ist.

8. Codeleser (10) nach einem der vorhergehenden Ansprüche,
wobei die erste Verarbeitungseinheit (30) für eine Auflösungserhöhung als Hilfsfunktion ausgebildet ist.

9. Codeleser (10) nach einem der vorhergehenden Ansprüche,
wobei die erste Verarbeitungseinheit (30) für eine Drehung eines Bildabschnitts als Hilfsfunktion ausgebildet ist.

10. Codeleser (10) nach einem der vorhergehenden Ansprüche,
wobei die erste Verarbeitungseinheit (30) für die Bearbeitung mit einem Filter als Hilfsfunktion ausgebildet ist, insbesondere einem Schärfefilter, einem Kantenfilter oder einem Glättungsfilter.

11. Codeleser (10) nach einem der vorhergehenden Ansprüche,
wobei die erste Verarbeitungseinheit (30) für einen Mustervergleich mit Codeabschnitten als Hilfsfunktion ausgebildet ist.

12. Codeleser (10) nach einem der vorhergehenden Ansprüche,
wobei die erste Verarbeitungseinheit (30) für eine perspektivische Korrektur oder eine Verzeichniskorrektur als Hilfsfunktion ausgebildet ist.

13. Verfahren zum Lesen optischer Codes (20), bei dem Bilddaten mit einem optischen Code (20) von einem Bildsensor (24) erfasst, von einer ersten Verarbeitungseinheit (30) in einem Bilddatenstrom von dem Bildsensor (24) in einen Speicher (34) übertragen und in einer zweiten Verarbeitungseinheit (32) decodiert (36) werden, wobei die gespeicherten Bilddaten ausgewertet werden, um den Codeinhalt des optischen Codes (20) auszulesen,
**dadurch gekennzeichnet,**
**dass** die erste Verarbeitungseinheit (30) beim Durchführen der Hilfsfunktion zumindest Teile der Bilddaten aus dem Speicher (34) zurückliest, vorverarbeitet und ein Vorverarbeitungsergebnis in den Speicher (34) zurückschreibt, so dass die erste Verarbeitungseinheit (30) eine Doppelfunktion als Streamer zum Übertragen der Bilddaten von dem Bildsensor (24) in den Speicher (34) und als Coprozessor zum Ausführen von Hilfsfunktionen erhält, und dass die zweite Verarbeitungseinheit (30) bei Bedarf zur Unterstützung des Decodierens (36) die Hilfsfunktion der ersten Verarbeitungseinheit (30) aufruft, wenn dies für das Decodieren des aktuellen Codes benötigt wird, und auf das Ergebnis der Hilfsfunktion zugreift, um das Decodieren fortzusetzen.

## Claims

1. A camera-based code reader (10) comprising an image sensor (24) for capturing image data with an optical code (20), a memory (34) for storing image data, a first processing unit (30) for transferring the image data from the image sensor (24) to the memory (34) in an image data stream, and a second processing unit (32) configured for decoding (36) in which the stored image data are evaluated in order to read out the code content of the optical code (20), **characterized in that** the first processing unit (30) is configured for at least one auxiliary function in which the first processing unit (30) reads back at least parts of the image data from the memory (34), preprocesses them and writes back a preprocessing result to the memory (34), so that the first processing unit (30) takes a dual function as streamer for transferring the image data from the image sensor (24) to the memory (34) and as coprocessor for performing auxiliary functions, and **in that** the second processing unit (32) is configured to call the auxiliary function of the first processing unit (30) to support the decoding (36) when needed for decoding the current code and to access the result of the auxiliary function to continue decoding.

2. The code reader (10) according to claim 1,
wherein the first processing unit (30) comprises a field programmable gate array (FPGA) and/or the second processing unit (32) comprises a microprocessor.

3. The code reader (10) according to claim 1 or 2,
wherein the first processing unit (30) reads out an image line or a part thereof from the image sensor (24) at a time and stores it in the memory (34).

4. The code reader (10) according to any of the preceding claims,
wherein the first processing unit (30) is configured to preprocess image data read in from the image sensor (24) before transfer to the memory (34), even while further image data is being read in from the image sensor (24).

5. The code reader (10) according to any of the preceding claims,
wherein the first processing unit (30) comprises a first partition (30a) for transferring image data from the image sensor (24) to the memory (34) and a second partition (30b) for performing auxiliary functions.

6. The code reader (10) according to claim 5,
wherein the first partition (30a) and the second partition (30b) are operated at different clock frequencies.

7. The code reader (10) according to any of the preceding claims,
wherein the first processing unit (30) is configured for segmentation with finding areas of interest with code candidates as an auxiliary function.

8. The code reader (10) according to any of the preceding claims,
wherein the first processing unit (30) is configured for a resolution increase as an auxiliary function.

9. The code reader (10) according to any of the preceding claims,
wherein the first processing unit (30) is configured for a rotation of an image section as an auxiliary function.

10. The code reader (10) according to any of the preceding claims,
wherein the first processing unit (30) is configured for processing with a filter as an auxiliary function, in particular a sharpness filter, an edge filter or a smoothing filter.

11. The code reader (10) according to any of the preceding claims,
wherein the first processing unit (30) is configured for pattern matching with code sections as an auxiliary function.

12. The code reader (10) according to any of the preceding claims,
wherein the first processing unit (30) is configured for perspective correction or distortion correction as an auxiliary function.

13. A method for reading optical codes (20), wherein image data with an optical code (20) is detected by an image sensor (24), transferred by a first processing unit (30) in an image data stream from the image sensor (24) to a memory (34) and decoded (36) in a second processing unit (32), wherein the stored image data are evaluated to read out the code content of the optical code (20), **characterized in that** the first processing unit (30) reads back at least parts of the image data from the memory (34), preprocesses and writes back a preprocessing result into the memory (34) when performing the auxiliary function, so that the first processing unit (30) takes a double function as streamer for transferring the image data from the image sensor (24) into the memory (34) and as coprocessor for performing auxiliary functions, and **in that** the second processing unit (30) calls the auxiliary function of the first processing unit (30) when needed for decoding the current code to support the decoding (36) and accesses the result of the auxiliary function to continue the decoding.

## Revendications

1. Lecteur de code basé sur une caméra (10) comprenant un capteur d'image (24) pour capturer des données d'image avec un code optique (20), une mémoire (34) pour stocker des données d'image, une première unité de traitement (30) pour transmettre les données d'image du capteur d'image (24) dans une mémoire (34) dans un flux de données d'image, et une deuxième unité de traitement (32) configurée pour le décodage (36) dans lequel les données d'image stockées sont évaluées afin de lire le contenu de code du code optique (20),
**caractérisée en ce que** la première unité de traitement (30) est configurée pour au moins une fonction auxiliaire dans laquelle la première unité de traitement (30) relit au moins des parties des données d'image de la mémoire (34), les prétraite et réécrit un résultat de prétraitement dans la mémoire (34), de sorte que la première unité de traitement (30) assume une double fonction en tant que streamer pour transmettre les données d'image du capteur d'image (24) dans la mémoire (34) et de coprocesseur pour exécuter des fonctions auxiliaires, et **en ce que** la deuxième unité de traitement (32) est configurée pour appeler la fonction auxiliaire de la première unité de traitement (30), si nécessaire, pour soutenir le décodage (36) lorsque cela est nécessaire pour le décodage du code actuel et pour accéder au résultat de la fonction auxiliaire afin de poursuivre le décodage.

2. Lecteur de code (10) selon la revendication 1,
dans lequel la première unité de traitement (30) comprend un FPGA (réseau de portes programmables) et/ou la deuxième unité de traitement (32) comprend un microprocesseur.

3. Lecteur de code (10) selon la revendication 1 ou 2,
dans lequel la première unité de traitement (30) lit respectivement une ligne d'image ou une partie de celle-ci à partir du capteur d'image (24) et la stocke dans la mémoire (34).

4. Lecteur de code (10) selon l'une des revendications précédentes,
dans lequel la première unité de traitement (30) est configurée pour prétraiter les données d'image lues respectivement par le capteur d'image (24) avant le transfert dans la mémoire (34), alors que d'autres données d'image sont encore lues par le capteur d'image (24).

5. Lecteur de code (10) selon l'une des revendications précédentes,
dans lequel la première unité de traitement (30) comprend une première partition (30a) pour le transfert des données d'image du capteur d'image (24) dans la mémoire (34) et une deuxième partition (30b) pour exécuter des fonctions auxiliaires.

6. Lecteur de code (10) selon la revendication 5,
dans lequel la première partition (30a) et la seconde partition (30b) fonctionnent à des fréquences d'horloge différentes.

7. Lecteur de code (10) selon l'une des revendications précédentes,
dans lequel la première unité de traitement (30) est configurée pour une segmentation avec détection de zones d'intérêt avec des candidats au code en tant que fonction auxiliaire.

8. Lecteur de code (10) selon l'une des revendications précédentes,
dans lequel la première unité de traitement (30) est configurée pour une augmentation de la résolution en tant que fonction auxiliaire.

9. Lecteur de code (10) selon l'une des revendications précédentes,
dans lequel la première unité de traitement (30) est configurée pour une rotation d'une section d'image en tant que fonction auxiliaire.

10. Lecteur de code (10) selon l'une des revendications précédentes,
dans lequel la première unité de traitement (30) est configurée pour le traitement avec un filtre en tant que fonction auxiliaire, en particulier un filtre de netteté, un filtre de bord ou un filtre de lissage.

11. Lecteur de code (10) selon l'une des revendications précédentes,
dans lequel la première unité de traitement (30) est configurée pour une comparaison de motifs avec des sections de code en tant que fonction auxiliaire.

12. Lecteur de code (10) selon l'une des revendications précédentes,
dans lequel la première unité de traitement (30) est configurée pour une correction de perspective ou une correction de répertoire en tant que fonction auxiliaire.

13. Procédé de lecture de codes optiques (20), dans lequel des données d'image avec un code optique (20) sont détectées par un capteur d'image (24), transmises par une première unité de traitement (30) dans un flux de données d'image du capteur d'image (24) dans une mémoire (34) et décodées (36) dans une deuxième unité de traitement (32), dans lequel les données d'image stockées sont évaluées pour lire le contenu du code optique (20), **caractérisé en ce que** la première unité de traitement (30), lors de l'exécution de la fonction auxiliaire, relit au moins des parties des données d'image de la mémoire (34), les prétraite et réécrit un résultat de prétraitement dans la mémoire (34), de sorte que la première unité de traitement (30) assume une double fonction en tant que streamer pour transmettre les données d'image du capteur d'image (24) dans la mémoire (34) et de coprocesseur pour exécuter des fonctions auxiliaires, et **en ce que** la deuxième unité de traitement (30) appelle, si nécessaire, la fonction auxiliaire de la première unité de traitement (30) pour soutenir le décodage (36), lorsque cela est nécessaire pour le décodage du code actuel et pour accéder au résultat de la fonction auxiliaire afin de poursuivre le décodage.
